# EUROPÄISCHE PATENTSCHRIFT

(11) **EP 2 623 083 B1**
(45) Veröffentlichungstag und Bekanntmachung des Hinweises auf die Patenterteilung: **11.05.2016**
(21) Anmeldenummer: 13150590.1
(22) Anmeldetag: 09.01.2013
(51) Int. Cl.: A61H 3/06, E01C 11/22

(54) **Gepflasterte Übergangsstelle zwischen einer Fahrbahn und einem Gehweg oder Radweg**
Surfaced transition between a roadway and a foot-path or cycle path
Point de transition pavé entre une voie et un trottoir ou une piste cyclable

(30) Priorität: 01.02.2012 DE 202012100330 U
(43) Veröffentlichungstag der Anmeldung: 07.08.2013
(73) Patentinhaber: Heinrich Klostermann GmbH & Co. KG, 48635 Coesfeld (DE)
(72) Erfinder: Klostermann, Peter, Dipl.-Betrw. (VWA), 48653 Coesfeld (DE); Kiffmeyer, Bernd, Dipl.-Ing., 48653 Coesfeld (DE)
(74) Vertreter: Glück Kritzenberger Patentanwälte PartGmbB

(56) Entgegenhaltungen:
- EP-A2- 1 903 146
- DE-B4-102004 005 165
- DE-U1- 9 114 667
- US-A1- 2008 090 008

## Beschreibung

Die Erfindung betrifft eine gepflasterte Übergangsstelle zwischen einer Fahrbahn und einem Gehweg oder Radweg gemäß dem Oberbegriff des Patentanspruches 1.

Eine gattungsgemäße Übergangsstelle zwischen einer Fahrbahn und einem Gehweg ist beispielsweise aus der Druckschrift DE 10 2004 005 165 B4 bekannt, bei der eine in einem Bordstein integrierte, vom Niveau des Geh- oder Radweges auf das Niveau der Fahrbahn abfallenden Bordsteinauffahrt und ein profiliertes Aufmerksamkeitsfeld für Sehbehinderte mit einem dem Aufmerksamkeitsfeld in Richtung der Fahrbahn vorgeordneten, ertastbaren Bordstein vorgesehen sind. Der abschüssige Oberflächenabschnitt der Bordsteinauffahrt umfasst ferner eine sehbehindertengerechte Profilierung als Ersatz für die ertastbare Kante des Bordsteins, wobei das Aufmerksamkeitsfeld quer zur Fahrbahn gesehen in Verlängerung der Bordsteinauffahrt auf dem Gehweg oder Radweg angeordnet ist und sich über die gesamte Breite des Geh- oder Radweges erstreckt. Die sehbehindertengerechte Profilierung ist hier als quer zur Fahrbahn ausgerichtetes Rillenprofil ausgebildet, wobei das Rillenprofil näherungsweise einen trapezförmigen Querschnitt aufweist. Der Praxiseinsatz hat gezeigt, dass Sehbehinderte Probleme haben, genannte sehbehindertengerechte Profilierung mittels deines Richtungssuchenden Blindenstockes einfach und schnell taktil zu erfassen.

Aus der EP 1 903 146 A2 ist ein Leitelement mit einer eine abtastbare Struktur aufweisenden Oberseite und eine damit hergestellte Übergangsstelle von einer Fahrbahn auf einen Geh- oder Radweg bekannt. Dem Leitelement sind Rampenelemente vorgeschaltet, welche eine rutschsichere Oberfläche aufweisen können, die beispielsweise aus rautenförmigen Erhebungen bestehen kann.

Die US 2008/0090008 A1 offenbart ein Verfahren zur Herstellung eines Rampenelementes sowie ein zugehöriges Rampenelementes an sich, welches auf der Oberseite eine Profilierung aufweist. Die Profilierung ist hierbei durch eine Vielzahl noppenartiger Erhebungen gebildet.

Ferner ist aus der DE 91 14 667 U1 ein Bordstein und eine zugehörige Haltestelle für Omnibusse bekannt, bei der auf der Oberseite der Bordsteine zur Erhöhung der Rutschfestigkeit dienende rautenförmige Erhebungen oder Vorsprünge vorgesehen sind.

Es ist daher Aufgabe der Erfindung, einen gepflasterten Gehwegabschnitt als behindertengerechte Übergangsstelle zwischen einer Fahrbahn und einem Gehweg oder Radweg zu schaffen, dessen Bordsteinauffahrt eine verbesserte taktile Erfassbarkeit aufweist. Die Aufgabe wird ausgehend von den Merkmalen des Oberbegriffes des Patentanspruches 1 durch dessen kennzeichnende Merkmale gelöst.

Der wesentliche Aspekt des erfindungsgemäßen gepflasterten Gehwegabschnittes der eingangs genannten Art ist darin zu sehen, dass die sehbehindertengerechte Profilierung durch rautenförmige Profilierungselemente gebildet ist. Diese bildet besonders vorteilhaft eine richtungsneutrale Profilierung aus, welche besonders einfach und schnell mittels des Blindenstockes eines Sehbehinderten erfassbar ist und ist besonders vorteilhaft mittels einer Rollerspitze abfahrbar.

Besonders vorteilhaft sind die rautenförmige Profilierungselemente jeweils beabstandet zueinander in parallel zur Fahrbahnlängsrichtung verlaufenden Reihen angeordnet, wobei zwei aufeinanderfolgende Reihen von rautenförmigen Profilierungselementen jeweils auf Lücke zueinander angeordnet sind. Durch die beschriebene Anordnung der rautenförmigen Profilierungselemente ergibt sich eine besonders zuverlässige taktile Erfassbarkeit.

Weiterhin vorteilhaft ist die Breite des Aufmerksamkeitsfeldes gemessen in Fahrbahnlängsrichtung kleiner als oder im Wesentlichen gleich der Breite der Bordsteinauffahrt, wobei das Aufmerksamkeitsfeld quer zu Fahrbahnlängsrichtung in Verlängerung der Bordsteinauffahrt auf dem Gehweg oder Radweg angeordnet ist und sich über die gesamte Breite des Geh- oder Radweges erstreckt. Das Aufmerksamkeitsfeld weist einen ersten und zweiten Feldabschnitt auf, wobei der erste Feldabschnitt ein quer zur Fahrbahn ausgerichtetes Rillenprofil aufweist, welches ein richtungsgebendes Rippenfeld ausbildet. Der zweite Feldabschnitt weist eine zentrale Profilierungszone und zwei seitliche Profilierungszonen auf, wobei die zentrale Profilierungszone ein quer zur Fahrbahn ausgerichtetes Rillenprofil und die zwei seitlichen Profilierungszonen eine noppenartigen Profilierung aufweisen. Vorteilhaft setzt sich das Rillenprofil der zentralen Profilierungszone im ersten Feldabschnitt fort, so dass der Sehbehinderte sicher zur Bordsteinauffahrt mittels des geschlossenen Rillenfeldes geführt wird.

Erfindungsgemäß ist die Bordsteinauffahrt als mehrteiliger Formkörper ausgebildet, und zwar in Form zumindest eines zentralen Formkörperteils und zumindest zwei seitlicher Formkörperteile. Im Bereich der ebenen oberen Anschlusskanten der Formkörperteile ist zumindest ein parallel zur Fahrbahn verlaufendes Wulstelement pro Formkörperteil vorgesehen, welches einen teilkreisförmigen Querschnitt aufweisen kann und/oder dessen Höhe ausgehend von der oberen Anschlusskante zwischen 4 mm bis 6 mm, vorzugsweise 5mm betragen kann. Dem der richtungsneutralen Profilierung vorgeordneten Wulstelement kommt eine Stopp-Funktion zu, durch welche der Sehbehinderte auf die Bordsteinauffahrt aufmerksam gemacht wird.

Zudem ergeben sich Weiterbildungen, Vorteile und Anwendungsmöglichkeiten der Neuerung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht. Es zeigen:
- Fig. 1: eine schematische Draufsicht auf einen gepflasterten Gehwegabschnitt als behindertengerechte Übergangsstelle zwischen einer Fahrbahn und einem Gehweg und/oder Radweg,
- Fig. 2: eine perspektivische Ansicht eines die Bordsteinauffahrt bildenden mehrteiligen Formkörpers,
- Fig. 3: eine Draufsicht auf die Oberseite des zentralen Formkörperteils in einer Ausschnittsdarstellung,
- Fig. 4: eine Draufsicht auf die Oberseite der seitlichen Formkörperteile,
- Fig. 5: beispielhaft einen Querschnitt durch den zentralen Übergangsbereich zwischen angrenzenden Gehweg- und Fahrbahnpflaster.

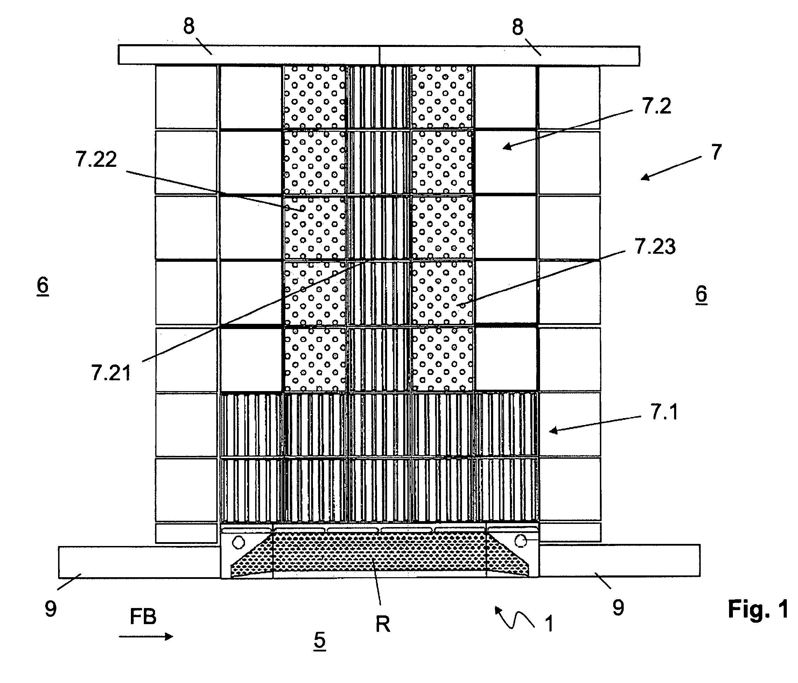

Fig. 1 zeigt in einer schematischen Draufsicht einen gepflasterten Gehwegabschnitt als behindertengerechte Übergangsstelle zwischen einer Fahrbahn 5 und einem Gehweg und/oder Radweg 6 mit einer Bordsteinauffahrt 1 für Rollstuhl- und Rollatorfahrer und einem Aufmerksamkeitsfeld 7. Aus Gründen der Übersichtlichkeit ist die gewöhnliche Pflasterung der Fahrbahn 5 nicht dargestellt und die Pflasterung des Gehwegs 6 durch Abbildung einer Pflasterreihe bzw. zweier Pflasterreihen beispielhaft angedeutet.

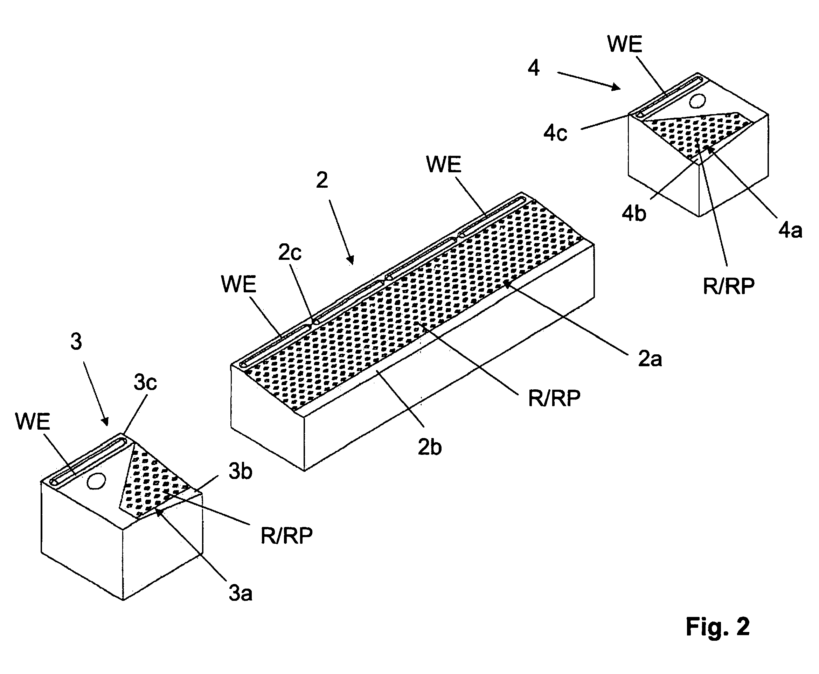

Die Bordsteinauffahrt 1 ist vorzugsweise in Form eines mehrteiligen Formkörpers 2, 3, 4 ausgebildet, und zwar umfasst der mehrteilige Formkörper zumindest ein zentrales Formkörperteil 2 sowie zumindest zwei jeweils seitlich daran anschließende seitliche Formkörperteile 3, 4. In Figur 2 ist beispielhaft eine erfindungsgemäße Bordsteinauffahrt 1 in Explosionsdarstellung dargestellt. Die Formkörperteile 2, 3, 4 sind jeweils einstückig ausgebildet und vorzugsweise als Betonfertigteile realisiert. Es versteht sich, dass eine mehrteilige Ausführung des zentralen Formkörperteils 2 ebenso möglich ist.

Das Aufmerksamkeitsfeld 7 ist quer zur Fahrbahn 5 in Verlängerung der Bordsteinauffahrt 1 auf dem Gehweg und/oder Radweg 6 angeordnet und erstreckt sich im vorliegenden Ausführungsbeispiel bis zum gegenüberliegenden Randstein 8 des Gehwegs 6. Das Aufmerksamkeitsfeld 7 weist erfindungsgemäß einen ersten, sich unmittelbar an die Bordsteinauffahrt 1 anschließenden ersten Feldabschnitt 7.1 auf, an den sich ein im Vergleich zum ersten Feldabschnitt 7.1 schmälerer zweiter Feldabschnitt 7.2 unmittelbar anschließt und sich bis zum Randstein 8 erstreckt. Die Breite des ersten Feldabschnitt 7.1 in Richtung quer zur Fahrbahn 5 bzw. Fahrbahnrichtung FB entspricht näherungsweise der Breite des die Bordsteinauffahrt 1 bildenden mehrteiligen Formkörpers 2, 3, 4. Aufgrund der unterschiedlichen Breite und Länge des ersten und zweiten Feldabschnittes 7.1, 7.2 ergibt sich in Draufsicht näherungsweise für das Aufmerksamkeitsfeld 7 die Form eines auf den Kopf stehenden T.

In einer bevorzugten Ausführungsform weist der erste Feldabschnitt 7.1 ein quer zur Fahrbahn 5 ausgerichtetes Rillenprofil auf, welches beispielsweise in Form eines trapezförmigen Profils realisiert ist. Der erste Feldabschnitt 7.1 bildet somit ein richtungsgebendes Rippenfeld aus, welches sich über die gesamte Breite der Bordsteinauffahrt 1 erstreckt.

Der zweite Feldabschnitt 7.2 ist in drei parallel zueinander verlaufende Zonen mit unterschiedlicher Profilierung aufgeteilt, und zwar in eine zentrale Profilierungszone 7.21, welche sich quer zur Fahrbahnlängsrichtung FB zwischen dem ersten Feldabschnitt 7.1 und dem Randstein 8 erstreckt. Vorzugsweise setzt sich die Profilierung des ersten Feldabschnittes 7.1 in der zentralen Profilierungszone 7.21 fort.

An die zentrale Profilierungszone 7.21 schließen sich jeweils eine seitliche Profilierungszone 7.22 bzw. 7.23 an, welche sich ebenfalls zwischen dem ersten Feldabschnitt 7.1 und dem Randstein 8 erstrecken und die vorzugsweise in Form einer noppenartigen Profilierung ausgebildet sind. Die zentrale Profilierungszone 7.21 und die seitlichen Profilierungszonen 7.22 bzw. 7.23 weisen näherungsweise denselben Flächeninhalt und/oder dieselbe Form auf.

Die seitlichen Profilierungszonen 7.22 bzw. 7.23 sind spiegelsymmetrisch zur zentralen Profilierungszone 7.21 angeordnet, welche einem Sehbehinderten die nachfolgende zentrale Profilierungszone 7.21 des Aufmerksamkeitsfeldes 7 anzeigen. Über die zentrale Profilierungszone 7.21 wird der Sehbehinderte an den ersten Feldabschnitt 7.1 des Aufmerksamkeitsfeldes 7 geführt, welcher den Übergangsbereich zu dem die Bordsteinauffahrt 1 bildenden mehrteiligen Formkörper 2, 3, 4 bildet.

Der die Bordsteinauffahrt 1 bildende mehrteilige Formkörper 2, 3, 4 ist mit einer sehbehindertengerechten Profilierung R versehen, welche erfindungsgemäß durch rautenförmige Profilierungselemente RP gebildet ist. Die erfindungsgemäß sehbehindertengerechten Profilierung R ist aufgrund der rautenförmigen Profilierungselemente RP richtungsneutral ausgebildet. Die rautenförmige Profilierungselemente RP sind jeweils beabstandet zueinander in parallel zur Fahrbahnlängsrichtung FB verlaufenden Reihen R1 bis Rn angeordnet, wobei zwei aufeinanderfolgende Reihen R1 bis Rn von rautenförmigen Profilierungselementen RP jeweils auf Lücke zueinander angeordnet sind, wodurch sich die richtungsneutrale sehbehindertengerechte Profilierung R bildet.

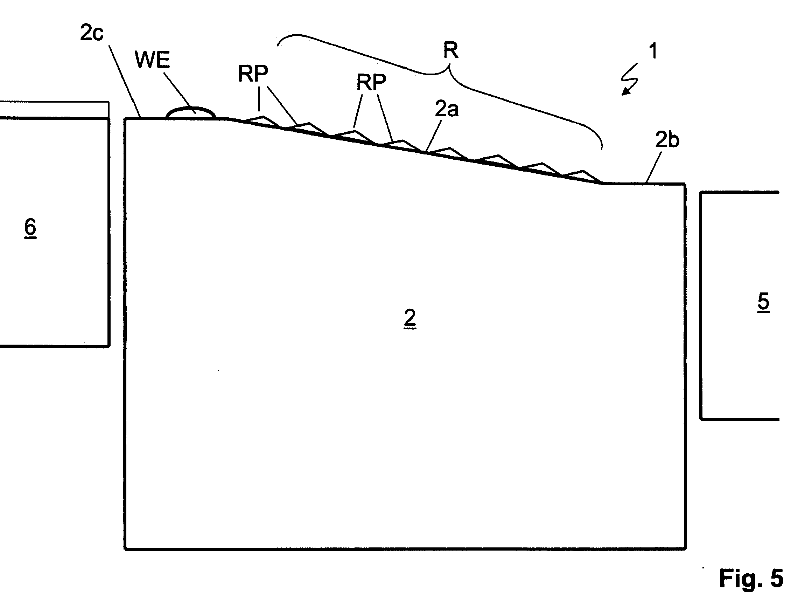

Zusätzlich zu den rautenförmigen Profilierungselementen RP ist im Bereich der ebenen oberen Anschlusskanten 2c, 3c, 4c der Formkörperteile 2, 3, 4 zumindest ein parallel zur Fahrbahn 5 verlaufende Wulstelement WE pro Formkörperteil 2, 3, 4 vorgesehen, welches beispielsweise einen teilkreisförmigen Querschnitt aufweist. In Figur 5 ist beispielsweise ein Querschnitt durch das zentrale Formkörperteil 2 dargestellt, auf dessen oberer Anschlusskante 2c das Wulstelement WE vorgesehen ist.

Die Höhe des Wulstelementes WE ausgehend von der oberen Anschlusskante beträgt zwischen 4 bis 6 mm, vorzugsweise 5mm. Das Wulstelement WE dient als Stoppfunktion für den richtungssuchenden Blindenstock eines Sehhinderten, welcher über den ersten Feldabschnitt 7.1 des Aufmerksamkeitsfeldes 7 bzw. dessen quer zur Fahrbahn 5 ausgerichtetes Rillenprofil an das Wulstelement WE geführt wird. Das Wulstelement WE schließt sich daher im eingebauten Zustand in Richtung Fahrbahn 6 an den ersten Feldabschnitt 7.1 auf den oberen Anschlusskanten 2c, 3c, 4c der mehrteiligen Formkörperteile 2, 3, 4 an.

In einer vorteilhaften Ausführungsvariante können zumindest auf dem zentralen Formkörperteil 2 mehrere Wulstelemente WE vorgesehen sein, welche in Reihe auf der oberen Anschlusskante 2c angeordnet sind. Dadurch ist eine verbesserte Entwässerung des zentralen Formkörperteils 2 gewährleistet. Bei dem in Figur 2 dargestellten Ausführungsbeispiel weist das zentrale Formkörperteil 2 beispielsweise vier, in Reihe hintereinander angeordnete Wulstelemente WE und jeweils das seitliche Formkörperteil 3, 4 ein Wulstelement WE auf.

Besonders vorteilhaft wird der Abstand der aneinander anschließenden Stirnseiten zweier benachbarten Wulstelemente WE derart gewählt, dass die Stockspitze eines Blindenstockes nicht ohne Anschlag durchrutschen kann, insbesondere auch im Fugenbereich zwischen zwei aneinander anschließenden Formkörperteilen 2, 3, 4.

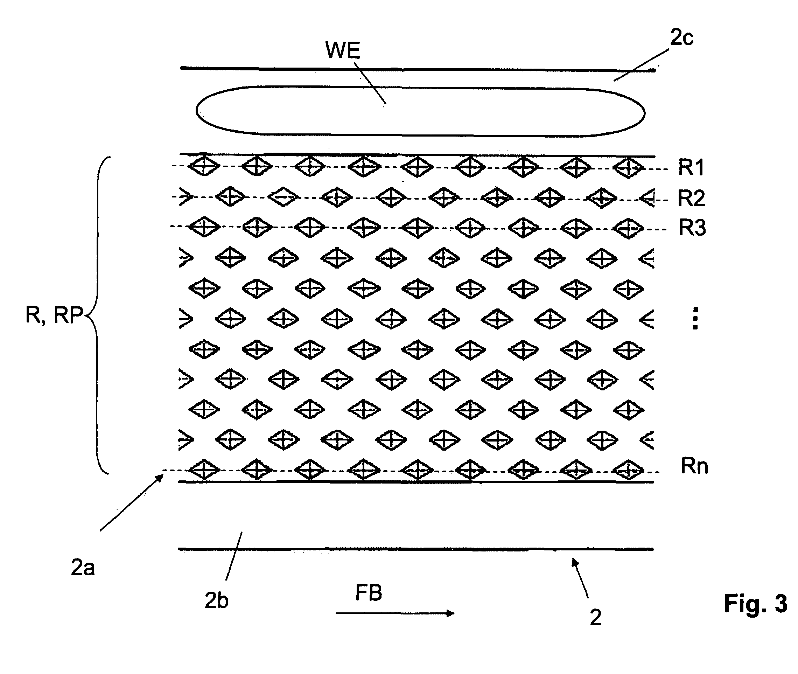

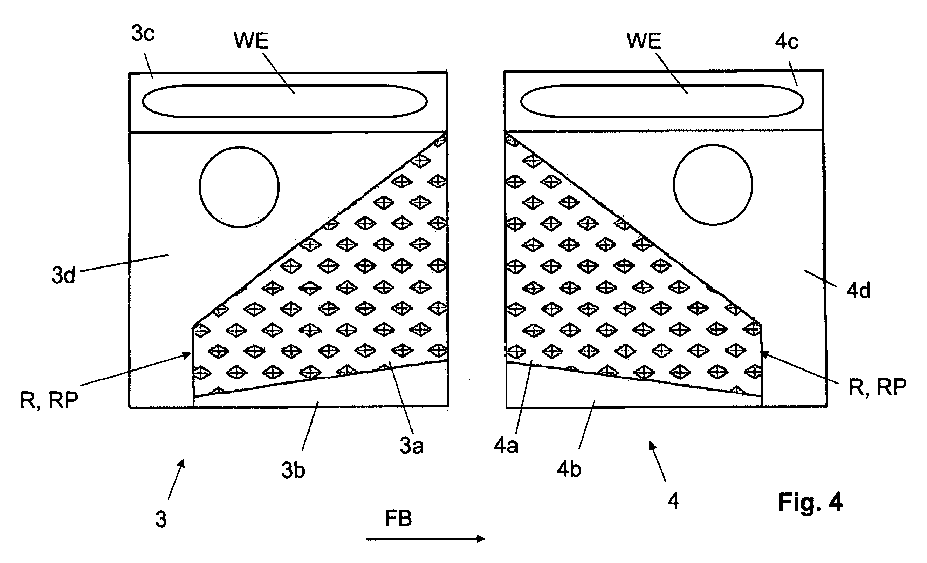

Die in den Figuren 3 und 4 im Detail dargestellte, rautenförmige Profilelemente RP umfassende, sehbehindertengerechte Profilierung R kann durch Sehbehinderte mittels des Blindenstockes leicht taktil analysiert werden und ersetzt somit die Kante eines an das Aufmerksamkeitsfeld 7 angrenzenden fahrbahnseitigen Bordsteins, die Sehbehinderten sonst als Erkennungsmerkmal für den Fahrbahnrand dient.

Das zentrale Formkörperteil 2 weist einen zur Fahrbahn 5 abschüssigen Oberflächenabschnitt 2a auf, welcher einen stetigen Übergang zwischen dem Niveau der Fahrbahn 5 und dem des Gehwegs 6 darstellt und der die sehbehindertengerechte Profilierung R aufweist. Mittels des abschüssigen Oberflächenabschnittes 2a wird beispielsweise ein Niveauunterschied von 2 cm bis 4 cm, vorzugsweise 3 cm ausgeglichen.

Der Oberflächenabschnitt 2a ist fahrbahnseitig durch eine ebene, auf Höhe der Fahrbahn 5 verlaufende unteren Anschlusskante 2b und gehwegseitig durch eine ebene, auf der Höhe des Gehweges 6 verlaufende obere Anschlusskante 2c berandet.

Die seitlichen Formkörperteile 3, 4 sind bezüglich ihrer Oberflächenkontur zueinander spiegelsymmetrisch geformt und weisen jeweils einen nach außen in Richtung des angrenzenden Bordsteins 9 spitz zulaufenden ansteigender Oberflächenabschnitt 3a , 4a als stetiger Übergang zwischen der Kontur der Bordsteinauffahrt 1 und der des Bordsteins 9 auf. Dementsprechend laufen die jeweiligen unteren Anschlusskanten 3c, 4c der seitlichen Formkörperteile 3, 4 als Verlängerungen der unteren Anschlusskanten 2b des zentralen Formkörperteils 2 ebenso nach außen spitz zu. Die jeweils gehwegseitig gelegene eben obere Anschlusskante 3b, 4b der seitlichen Formkörperteile 3, 4 dient als Verlängerung der gehwegseitigen ebenen oberen Anschlusskante 2b des zentralen Formkörperteils 2. nach außen hin erweitert, wie in Fig. 1, 2 und 4 zu erkennen ist. An den spitz zulaufenden ansteigender Oberflächenabschnitt 3a , 4a schließt sich ein weiterer ebener Oberflächenabschnitt 3d, 4d, der das Niveau des stirnseitig anschließenden Bordsteins 9 aufweist. Die seitlichen Formkörperteile 3, 4 können im Bereich der Oberflächenabschnitte 3d, 4d, und zwar unterhalb der Wulstelemente WE jeweils einen Glasreflektor aufweisen.

Die Oberflächenabschnitte 2a des zentralen Formkörperteils 2 sowie die Oberflächenabschnitte 3a, 4a der seitlichen Formkörperteile 3, 4 sind, wie in Fig. 1, 2, 3 und 4 dargestellt, mit der erfindungsgemäßen Profilierung R versehen.

Der erste Feldabschnitt 7.1 des Aufmerksamkeitsfeldes 7 weist mindestens eine Breite von 90 cm auf und ist in einer bevorzugten Ausführungsvariante mit dunklen, glatten Plattenelementen eingefasst.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Bordsteinauffahrt
- 2: zentrales Formkörperteil
- 2a: Oberflächenabschnitt
- 2b: untere Anschlusskante
- 2c: obere Anschlusskante
- 3: seitliches Formkörperteil
- 3a: Oberflächenabschnitt
- 3b: untere Anschlusskante
- 3c: obere Anschlusskante
- 4d: weiterer Oberflächenabschnitt
- 4: seitliches Formkörperteil
- 4a: Oberflächenabschnitt
- 4b: untere Anschlusskante
- 4c: obere Anschlusskanten
- 4d: weiterer Oberflächenabschnitt
- 5: Fahrbahn
- 6: Gehweg oder Radweg
- 7: Aufmerksamkeitsfeld
- 7.1: erster Feldabschnitt
- 7.2: zweiter Feldabschnitt
- 7.21: zentrale Profilierungszone
- 7.22: seitliche Profilierungszone
- 7.23: seitliche Profilierungszone
- 8: Randstein
- 9: Bordstein
- FB: Fahrbahnlängsrichtung
- R: Profilierung
- R1 bis Rn: Reihen
- RP: rautenförmige Profilelemente
- WE: Wulstelement

## Patentansprüche

1. Gepflasterter Gehwegabschnitt als behindertengerechte Übergangsstelle zwischen einer Fahrbahn (5) und einem Geh- oder Radweg (6) mit einer in einem Bordstein (Formkörper 2, 3, 4) integrierten, vom Niveau des Geh- oder Radweges (6) auf das Niveau der Fahrbahn (5) abfallenden Bordsteinauffahrt (1) für Rollstuhl- und Rollatorfahrer und einem profilierten Aufmerksamkeitsfeld (7) für Sehbehinderte mit einem dem Aufmerksamkeitsfeld (7) in Richtung der Fahrbahn (5) vorgeordneten, ertastbaren, die Bordsteinauffahrt (1) bildenden mehrteiligen Formkörper (2, 3, 4), wobei zumindest der abschüssige Oberflächenabschnitt der Bordsteinauffahrt (1) eine sehbehindertengerechte Profilierung (R) aufweist, die durch rautenförmige Profilierungselemente (PR) gebildet ist, und die Bordsteinauffahrt (1) zumindest ein zentrales Formkörperteil (2) und zumindest zwei seitliche Formkörperteile (3, 4) aufweist, **dadurch gekennzeichnet, dass** im Bereich der ebenen oberen Anschlusskanten (2c, 3c, 4c) der Formkörperteile (2, 3, 4) zumindest ein parallel zur Fahrbahn (5) verlaufendes Wulstelement (WE) pro Formkörperteil (2, 3, 4) vorgesehen ist.

2. Gehwegabschnitt nach Anspruch 1, **dadurch gekennzeichnet, dass** die sehbehindertengerechten Profilierung (R) richtungsneutral ausgebildet ist.

3. Gehwegabschnitt nach Anspruch 1 oder 2, **dadurch gekennzeichnet, dass** die rautenförmige Profilierungselemente (RP) jeweils beabstandet zueinander in parallel zur Fahrbahnlängsrichtung (FB) verlaufenden Reihen (R1 bis Rn) angeordnet sind, wobei zwei aufeinanderfolgende Reihen (R1 bis Rn) von rautenförmigen Profilierungselementen (RP) jeweils auf Lücke zueinander angeordnet sind.

4. Gehwegabschnitt nach einem der Ansprüche 1 bis 3, **dadurch gekennzeichnet, dass** die Breite des Aufmerksamkeitsfeldes (7) gemessen in Fahrbahnlängsrichtung (FB) kleiner als oder im wesentlichen gleich der Breite der Bordsteinauffahrt (1) ist.

5. Gehwegabschnitt nach einem der vorhergehenden Ansprüche, **dadurch gekennzeichnet, dass** das Aufmerksamkeitsfeld (7) quer zu Fahrbahnlängsrichtung (FB) in Verlängerung der Bordsteinauffahrt (1) auf dem Gehweg oder Radweg (6) angeordnet ist und sich über die gesamte Breite des Geh- oder Radweges (6) erstreckt.

6. Gehwegabschnitt nach einem der vorhergehenden Ansprüche, **dadurch gekennzeichnet, dass** das Aufmerksamkeitsfeld (7) einen ersten und zweiten Feldabschnitt (7.1, 7,2) aufweist.

7. Gehwegabschnitt nach Anspruch 6, **dadurch gekennzeichnet, dass** der erste Feldabschnitt (7.1) ein quer zur Fahrbahn (5) ausgerichtetes Rillenprofil aufweist, welches ein richtungsgebendes Rippenfeld ausbildet.

8. Gehwegabschnitt nach Anspruch 6 oder 7, **dadurch gekennzeichnet, dass** der zweite Feldabschnitt (7.2) eine zentrale Profilierungszone (7.21) und zwei seitliche Profilierungszonen (7.22 bzw. 7.23) aufweist, wobei die zentrale Profilierungszone (7.21) ein quer zur Fahrbahn (5) ausgerichtetes Rillenprofil und die zwei seitlichen Profilierungszonen (7.22 bzw. 7.23) eine noppenartige Profilierung aufweisen.

9. Gehwegabschnitt nach Anspruch 8, **dadurch gekennzeichnet, dass** das Rillenprofil der zentralen Profilierungszone (7.21) sich im ersten Feldabschnitt (7.1) fortsetzt.

10. Gehwegabschnitt nach einem der vorhergehenden Ansprüche, **dadurch gekennzeichnet, dass** das Wulstelement (WE) einen teilkreisförmigen Querschnitt aufweist und/oder die Höhe des Wulstelementes (WE) ausgehend von der oberen Anschlusskante (2c, 3c, 4c) zwischen 4 mm bis 6 mm, vorzugsweise 5mm beträgt.

## Claims

1. A paved footpath section as a transition point suitable for the disabled between a roadway (5) and a footpath or cycle path (6) with a curbstone ramp (1) for wheelchair and walking frame users, which is integrated into a curbstone (moulded body 2, 3, 4) and descends from the level of the footpath or cycle path (6) to the level of the roadway (5), and a profiled attention field (7) for the visually impaired with a multi-part moulded body (2, 3, 4) which is disposed in front of the attention field (7) in the direction of the roadway (5), is identifiable by touch and forms the curbstone ramp (1), wherein at least the sloping surface section of the curbstone ramp (1) comprises a profiling (R) suitable for the visually impaired, which is composed of rhombical profiling elements (PR), and the curbstone ramp (1) comprises at least one central moulded body part (2) and at least two lateral moulded body parts (3, 4), **characterised in that**, in the region of the plane upper connecting edges (2c, 3c, 4c) of the moulded body parts (2, 3, 4), at least one bead element (WE) running parallel to the roadway (5) is provided per moulded body part (2, 3, 4).

2. Footpath section according to claim 1, **characterised in that** the profiling (R) suitable for the visually impaired is constituted directionally neutral.

3. Footpath section according to claim 1 or 2, **characterised in that** the rhombical profiling elements (RP) are each disposed spaced apart from one another in rows (R1 to Rn) running parallel with the roadway longitudinal direction (FB), wherein two successive rows (R1 to Rn) of rhombical profiling elements (RP) are each disposed offset one to the other.

4. Footpath section according to any one of claims 1 to 3, **characterised in that** the width of the attention field (7) measured in the roadway longitudinal direction (FB) is smaller than or essentially the same as the width of the curbstone ramp (1).

5. Footpath section according to any one of the preceding claims, **characterised in that** the attention field (7) is disposed transversely to the roadway longitudinal direction (FB) in an extension of the curbstone ramp (1) on the footpath or cycle path (6) and extends over the entire width of the footpath or cycle path (6).

6. Footpath section according to any one of the preceding claims, **characterised in that** the attention field (7) comprises a first and second field section (7.1, 7.2).

7. Footpath section according to claim 6, **characterised in that** the first field section (7.1) comprises a grooved profile orientated transversely to the roadway (5), said grooved profile constituting a direction-indicating rib field.

8. Footpath section according to claim 6 or 7, **characterised in that** the second field section (7.2) comprises a central profiling zone (7.21) and two lateral profiling zones (7.22 and 7.23), wherein the central profiling zone (7.21) comprises a grooved profile orientated transversely to the roadway (5) and the two lateral profiling zones (7.22 and 7.23) comprise a nub-like profiling.

9. Footpath section according to claim 8, **characterised in that** the grooved profile of the central profiling zone (7.21) continues in the first field section (7.1).

10. Footpath section according to any one of the preceding claims, **characterised in that** the bead element (WE) has a cross-section in the shape of a part-circle and/or the height of the bead element (WE) proceeding from the upper connecting edge (2c, 3c, 4c) amounts to between 4 mm to 6 mm, preferably 5 mm.

## Revendications

1. Section de trottoir pavée servant de point de transition adapté aux handicapés entre une chaussée (5) et une piste piétonnière ou cyclable (6), comportant un accès au bord du trottoir (1) intégré dans un bord de trottoir (corps moulé 2, 3, 4), descendant du niveau de la piste piétonnière ou cyclable (6) jusqu'au niveau de la chaussée (5) pour les conducteurs de fauteuils roulants et de déambulateurs et un champ de signalement profilé (7) pour les malvoyants comportant un corps moulé en plusieurs pièces (2, 3, 4) installé en amont du champ de signalement (7) en direction de la chaussée (5), palpable et formant l'accès au bord du trottoir (1), dans laquelle au moins la section de surface pentue de l'accès au bord du trottoir (1) présente un profilage (R) adapté aux malvoyants qui est constitué par des éléments de profilage en forme de losanges (PR) et l'accès au bord du trottoir (1) présente au moins une partie de corps moulé centrale (2) est au moins deux parties de corps moulé latérales (3, 4), **caractérisée en ce que**, à la Zone des arêtes de raccordement supérieures planes (2c, 3c, 4c) des parties de corps moulé (2, 3, 4), il est prévu au moins un élément à bourrelet (WE) orienté parallèlement à la chaussée (5) par partie de corps moulé (2, 3, 4).

2. Section de trottoir selon la revendication 1, **caractérisée en ce que** le profilage adapté aux malvoyants (R) est réalisé avec une direction neutre.

3. Section de trottoir selon la revendication 1 ou 2, **caractérisée en ce que** les éléments de profilage en forme de losanges (RP) sont respectivement disposés espacés les uns des autres dans des rangées (R1 à Rn) s'étendant parallèlement au sens longitudinal de la chaussée (FB), dans laquelle deux rangées successives (R1 à Rn) d'éléments de profilage en forme de losanges (RP) sont respectivement disposées en quinconce l'une par rapport à l'autre.

4. Section de trottoir selon une des revendications 1 à 3, **caractérisée en ce que** la largeur du champ de signalement (7), mesurée dans le sens longitudinal de la chaussée (FB), est inférieure ou sensiblement égale à la largeur de l'accès au bord du trottoir (1).

5. Section de trottoir selon une des revendications précédentes, **caractérisée en ce que** le champ de signalement (7) est disposé transversalement au sens longitudinal de la chaussée (FB) dans le prolongement de l'accès au bord du trottoir (1) sur la piste piétonnière ou cyclable (6) et s'étend sur toute la largeur de la piste piétonnière ou cyclable (6).

6. Section de trottoir selon une des revendications précédentes, **caractérisée en ce que** le champ de signalement (7) présente une première et une seconde sections de champ (7.1, 7,2).

7. Section de trottoir selon la revendication 6, **caractérisée en ce que** la première section de champ (7.1) présente un profil rainuré orienté transversalement à la chaussée (5) et qui constitue un champ des renforts indiquant la direction.

8. Section de trottoir selon la revendication 6 ou 7, **caractérisée en ce que** la seconde section de champ (7.2) présente une zone de profilage centrale (7.21) et deux zones de profilage latérales (7.22 ou 7.23), la zone de profilage centrale (7.21) présentant un profil rainuré orienté transversalement à la chaussée (5) et les deux zones de profilage latérales (7.22 ou 7.23) un profilage à aspérités.

9. Section de trottoir selon la revendication 8, **caractérisée en ce que** le profil rainuré de la zone de profilage centrale (7.21) se poursuit dans la première section de champ (7.1).

10. Section de trottoir selon une des revendications précédentes, **caractérisée en ce que** l'élément à bourrelet (WE) présente une section transversale en forme d'arc de cercle et/ou la hauteur de l'élément à bourrelet (WE), en partant de l'arête terminale supérieure (2c, 3c, 4c), est de 4 mm à 6 mm, de préférence 5 mm.
